# EUROPEAN PATENT APPLICATION

(11) **EP 1 110 829 A2**
(43) Date of publication of application: **27.06.2001**
(21) Application number: 00403409.6
(22) Date of filing: 05.12.2000
(51) Int. Cl.: B60R 25/02

(54) **Lock**

(30) Priority: 09.12.1999 GB 9929185
(71) Applicant: Valeo Security Systems, Birmingham B32 3DE (GB)
(72) Inventor: Rutherford, Colin, Blyth Northumberland (GB)
(74) Representative: Lenne, Laurence

(57) **Abstract**

A lock has a tumbler with a camming surface, the tumbler being urged outwardly when the key is inserted. As the lock barrel moves inwards, the tumbler rotates about an axis against a spring force to pass a formation on the lock housing and, once past the formation, latches behind the formation to prevent the barrel from moving back outwards.

## Description

The present invention relates to a lock, and more particularly but not exclusively to a so-called steering lock for a motor vehicle. The present invention also relates to a method of operating such a lock.

In many countries it is a legal requirement to provide a secondary latching feature in a vehicle steering lock. The secondary latching feature prevents the activation of the device that locks the steering in the event of a failure in the primary lock. The secondary latching must remain enabled until the key has been removed from the lock and operates to constrain the device that locks the steering in an unlocked condition until such removal has occurred.

The secondary latching mechanism is frequently enabled by translation of the barrel of the lock along the axis of rotation of the barrel. To achieve this translation two effects are frequently used namely pushing of the key against a part or parts which in turn move the lock barrel along the axis of rotation, or after insertion of the key into the barrel, rotation of the key causes the barrel to translate along its axis.

Each of these effects is achieved by a number of different designs but they commonly have different disadvantages. For designs using the first effect the insertion force of the key is increased whereas for designs using the second effect key rotation forces are increased. The increased forces may themselves be undesirable or indeed unacceptable. In either case a large number of components may be required giving rise to increased cost and assembly difficulty.

It is accordingly an object of the present invention to at partially mitigate the above-mentioned difficulties.

According to a first aspect of the present invention there is provided a lock having a barrel and a housing for the barrel, the barrel having a key way for a key and being translatable with respect to the housing along a barrel axis whilst said key is inserted in said key way, said barrel supporting a tumbler, the tumbler having a camming surface in use interacting with said key upon insertion thereof to urge said tumbler outwards, said tumbler being movable with respect to said barrel to permit said tumbler to pass beyond a formation of said housing as said barrel translates in a first sense, and thereafter to engage a surface of said formation to prevent said barrel from translating in a second sense opposite to said first sense.

According to a second aspect of the present invention there is provided a lock having a barrel and the housing for the barrel, the barrel having a key way for a key and being translatable with respect to the housing along the barrel axis whilst said key is inserted into said key way, said barrel supporting a tumbler via a resilient element, the tumbler having a camming surface in use interacting with said key upon insertion thereof to urge said tumbler outwards against said resilient element, said tumbler being rotatable about an axis perpendicular to said barrel axis to permit said tumbler to pass beyond a formation of said housing and said barrel translates in a first sense, and thereafter to rotate about said axis perpendicular to said barrel axis in response to said resilient element to a disposition with respect to said barrel in which it engages a surface of said formation to prevent said barrel translating in a second sense opposite to said first sense.

Preferably said tumbler is rotatable about an axis perpendicular to said barrel axis.

Advantageously said barrel is rotatable by said key to cause said translation in said first sense.

Conveniently the tumbler is connected to the barrel by a resilient element for urging said tumbler to an undeployed position.

Advantageously said formation of said housing comprises a circumferentially-disposed inwardly-directed ridge on a surface of said housing.

According to a third aspect of the present invention there is provided a method of operating a lock having a barrel and the housing for said barrel, the method comprising:-
with said barrel in an initial disposition with respect to said housing, inserting a key into a key way of said barrel, whereby a tumbler moves outwardly with respect to said barrel;
causing said barrel to translate in a first sense along an axis whereby said tumbler passes beyond a feature of said housing;
causing said barrel to translate in a second sense whereby said tumbler engages said feature of said housing, thereby preventing said barrel from translating in said second sense to said initial disposition; and
withdrawing said key, whereby said tumbler moves radially inwardly with respect to said barrel to no longer engage said feature whereby said barrel translates to said initial disposition.

Preferably said step of causing said barrel to translate in said first sense further comprises rotating said barrel simultaneously with said translation.

A preferred embodiment of the invention will now be described, by way of example only, with reference to the accompanying drawings in which:-

Figure 1 shows a partial cross-section through a lock embodying the invention, with the key partially inserted.

Figure 2 shows a view similar to that of Figure 1 with the key fully inserted but before rotation thereof.

Figure 3 shows a view similar to Figure 1 and Figure 2, with the key fully inserted and partially turned.

Figures 4 and 5 show views similar to Figures 1-3 with the barrel at successive positions of movement.

Figure 6 shows a view similar to that of Figures 1-5 during unlocking of the lock but before removal of the key.

Figure 7 is a front perspective view of the tumbler of Figures 1-6.

Figure 8 is a view similar to that of Figure 1, showing a first spring suspension for the tumbler; and

Figure 9 is a view similar to that of Figure 1, showing a second spring suspension for the tumbler.

In the various figures, like reference numerals refer to like parts.

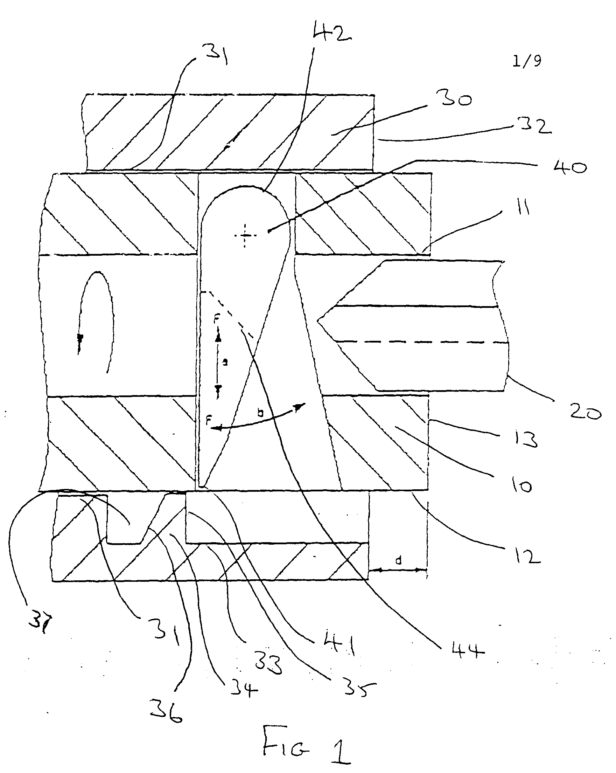

Referring first to Figure 1 a lock includes a barrel 10 which is generally circular-cylindrical and has an internal wall 11 which defines a key way for insertion therein of a key 20. The barrel 10 is disposed within a housing 30 which in turn has an internal wall 31 which generally closely conforms to an outer wall 12 of the barrel 10.

The barrel 10 has a front face 13 which is figuratively shown as being disposed a distance d forward of a front face wall 32 of the housing 30.

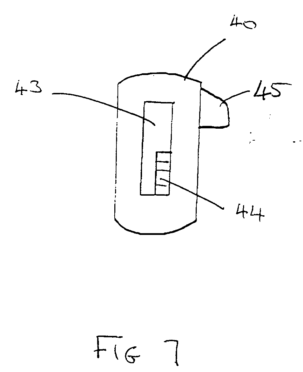

A tumbler 40 is disposed in a cut-out portion of the barrel 10. The tumbler 10 is generally wedge shaped having a first narrow end 41 and a second opposing end 42, the second opposing end having a generally part-circular at a surface. As will be seen more clearly in Figure 7, the tumbler has an aperture 43 which allows the key 20 to pass through the tumbler.

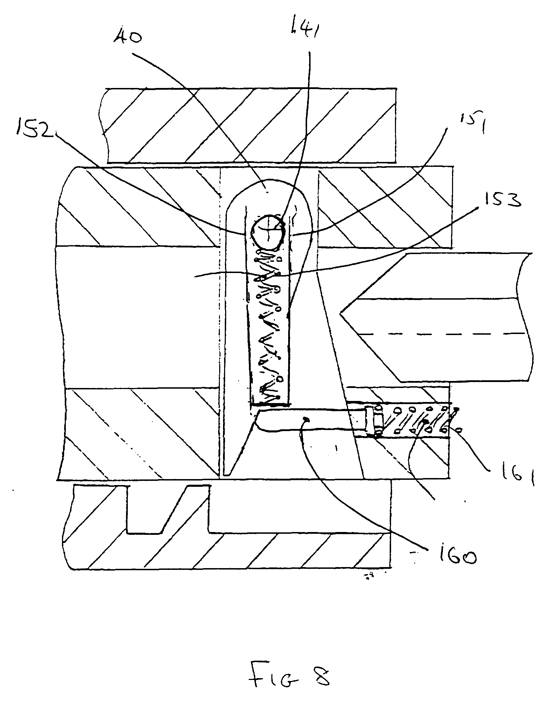

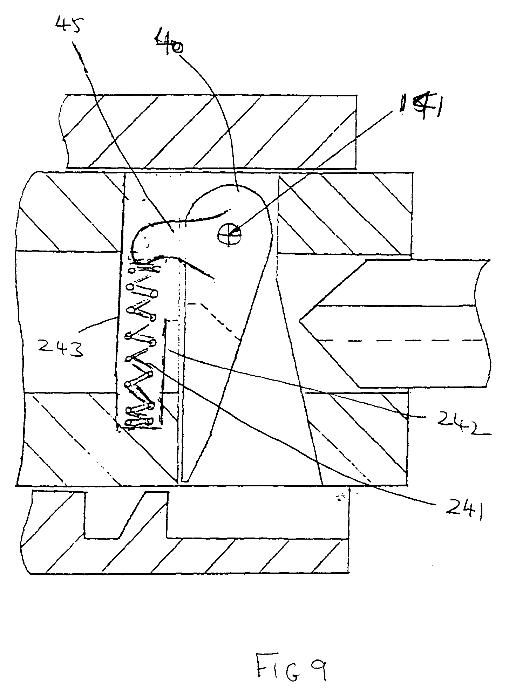

As seen in Figure 1, the tumbler, when the key is not inserted is disposed substantially within the confines of the barrel 10. Two alternative spring suspensions for biasing the tumbler to this disposition are shown in Figures 8 and 9. However, the aperture 43 has a lower (as shown) camming wall surface 44 whose function will be described later herein.

Continuing to refer to Figure 1, it will be seen that a forward portion of the housing 30 has an inner wall portion 33 which is spaced from the outer wall 12 of the barrel, the inner wall portion 33 having an upstanding rib formation 34 directed towards the barrel 10. The rib formation 34 has a forward wall 35 which is disposed substantially radially of the barrel axis and a rear wall 36 which is sloping.

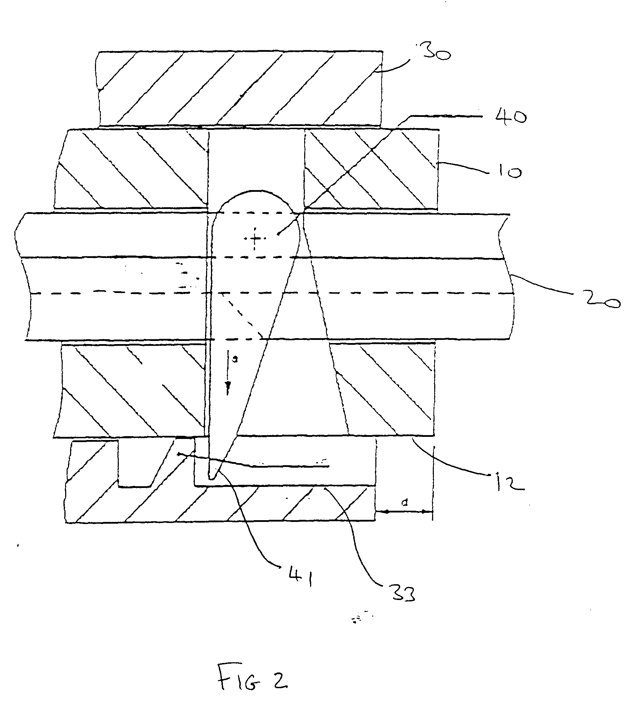

Referring now to Figure 2, it will be seen that the key 20 has been fully inserted into the key way of the barrel 10. The passage of the key through the aperture 43 of the tumbler 40 causes the tumbler to move outwardly by virtue of the interaction of the end of the key on the camming surface 44. Thus, the tumbler 40 moves against the action of the spring so that the generally-tapered end 41 of the tumbler enters the space defined between the inner front wall portion 33 of the housing 30 and the outer wall 12 of the barrel.

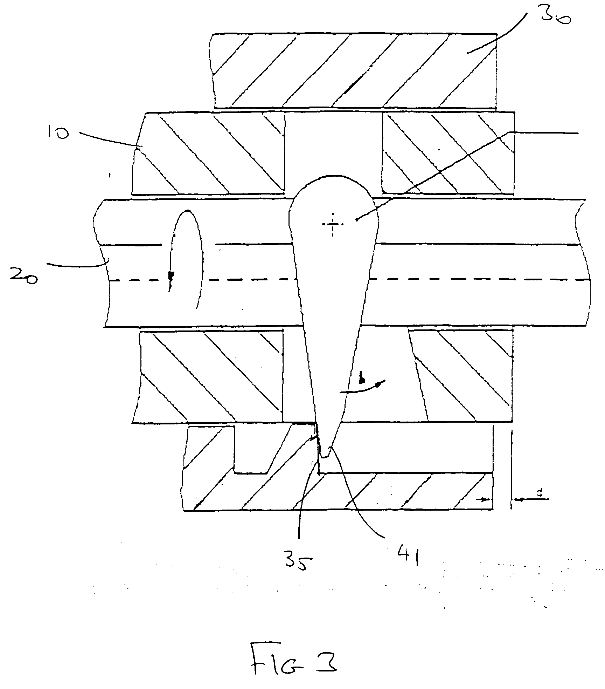

Referring now to Figure 3, the key 20 is now rotated and the rotation entrains the barrel 10 in rotation. The rotation of the barrel causes it to simultaneously translate towards the left as shown, inwardly of the housing 30. Inspection of Figure 3 will show that the distance d has decreased. It will be seen that the tapered end region 41 of the tumbler 40 is in contact with the forward wall portion 35 of the ridge 34 and that the inward motion of the key 20 and barrel 10 entrains the tumbler 40 in anti-clockwise rotation, the direction b as shown.

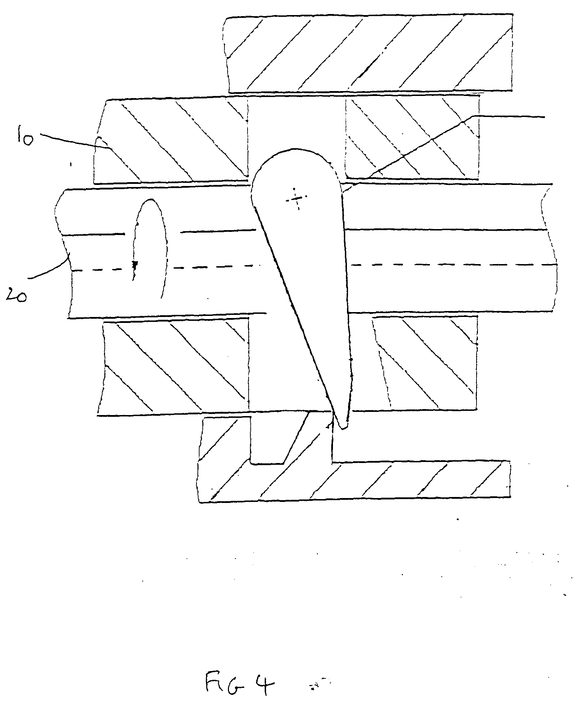

Figure 4 shows a similar view to that of Figure 3 but with the barrel 10 moved still further leftwards due to continued rotation of the key 20.

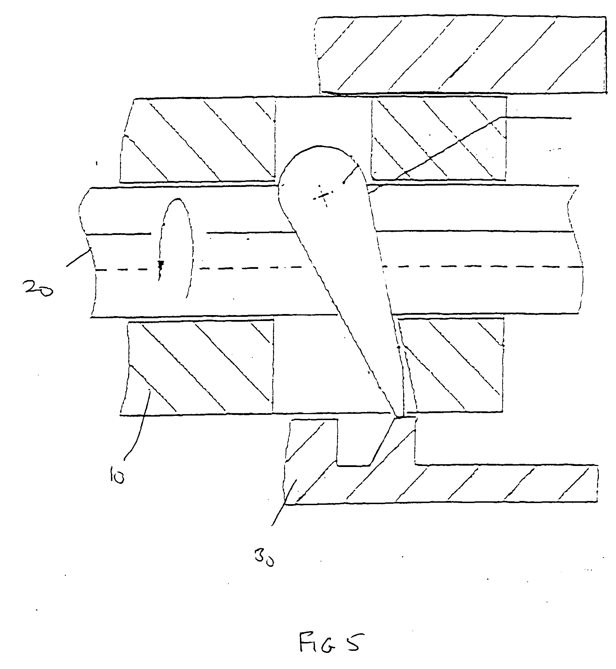

Figure 5 shows the end of the tapered region 35 of the tumbler passing along the inner face of the ridge 34 as the barrel 10 moves towards its left-most extremity upon yet further rotation of the key 20.

It will be understood by those skilled in the art that the final stage of movement to the left of the barrel 10 will allow the tumbler 40 to rotate clockwise and to pass beyond the ridge formation 34, with the end of the tapered region 41 passing down the sloped wall 36 to the region 37.

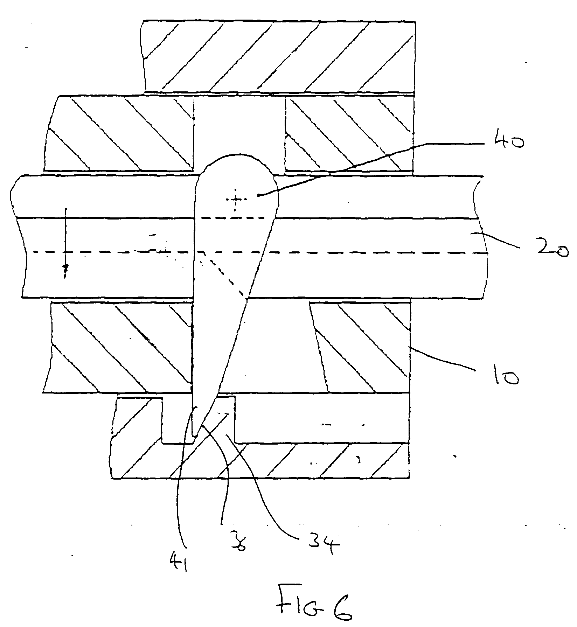

When the key 20 is rotated in the opposite direction with a view to its subsequent removal, the barrel 10 is entrained in rotation and simultaneously translates to the right as shown in Figure 6. However, the barrel 10 is prevented from returning to the initial position shown in Figure 1 due to the engagement between the tumbler 40 and the rear face 36 of the ridge formation 34.

When the key 20 is withdrawn from the key way the spring bias on the tumbler 40 causes it to withdraw to the position shown in Figure 1 and allows the barrel to move forward to its initial position.

As is known to those skilled in the art, the initial movement of the barrel 10 from the protruded initial position shown in Figure 1 to the position where it is flush with the front face of the housing 30 is selected to be sufficient to unlock an associated steering lock. Thus, it will be seen that it is not possible for the barrel to emerge from the housing and thus not possible for the steering lock to become engaged while the key remains in the lock after operation, in accordance with the US Federal Motor Vehicle Safety Standard MVSS 114. paragraph 4.5c.

The action of the tumbler 40 is thus to latch the lock in a secondary latched position in which an associated steering lock remains in a safe condition. The invention allows the secondary latch to be engaged without substantial increase of operating force on the lock and without the complexities usual in the prior art.

Figure 7 shows the face of the tumbler 40, with the slot 43 and the camming wall surface 44. As seen the top of the camming surface is flat. This camming surface engages with the end of a flute of an inserted key to cause the tumbler to move downwardly, as shown. The flute then runs along the flat top of the camming surface to maintain the tumbler outwardly deployed. Figure 7 also shows a protruding ear 45, described with respect to Figure 9.

Referring now to Figure 8, the tumbler 40 has a pivot pin 141 projecting from both sides thereof. The pivot pin rests in a slot defined by two opposing walls, 151 and 152, the slot defined therebetween running generally transverse to the barrel 10. At the bottom of the slot there is a plunger 160 disposed generally parallel with the key way and having a coil spring 161 biasing it generally outwardly. The end of the plunger 160 engages with a surface of the tumbler 140 so as to bias it in a generally leftward direction as shown. In the slot defined by the walls 151, 152 there is a further coil spring 153 which acts to bias the tumbler 40 generally upwardly as shown. The first coil spring 161 is dimensioned to urge the tumbler to the configuration shown in Figure 6 - ie so that the plunger 160 remains in contact with the surface of the tumbler 40 at all times. Likewise, the second coil spring 153 is dimensioned to urge the tumbler 40 into the position shown in Figure 8, or Figure 1.

Referring to Figure 9, an alternative spring suspension arrangement is shown in which the tumbler 40 has an ear 245 shaped to provide a camming effect. The pivot pin 141 again runs in a slot (not shown) and the extremity of the ear 245 engages with a coil spring 241 constrained within a slot defined by two wall portions 242, 243. The curved end of the ear 245 provides a clockwise turning force on the tumbler 40 and at the same time urges the tumbler 40 upwards as shown into the position shown in Figure 9.

In the case of Figure 8, insertion of the key moves the tumbler downwardly as shown and compresses the second coil spring 153 with the plunger 160 then urging the tumbler in a generally clockwise direction against the force of the first coil spring 161.

In the case of Figure 9, insertion of the key causes the coil spring 241 to become compressed, the same coil spring causing the clockwise force to be applied.

It will be understood that other spring arrangements could be used, for example the use of hair springs. Alternatively, other resilient means can be used to urge the tumbler in the required direction, or alternatively mechanical intervention can be used to cause the tumbler to translate and rotate in the required fashion.

## Claims

1. A lock having a barrel and a housing for the barrel, the barrel having a key way for a key and being translatable with respect to the housing along a barrel axis whilst said key is inserted in said key way, said barrel supporting a tumbler, the tumbler having a camming surface in use interacting with said key upon insertion thereof to urge said tumbler outwards, said tumbler being movable with respect to said barrel to permit said tumbler to pass beyond a formation of said housing as said barrel translates in a first sense, and thereafter to engage a surface of said formation to prevent said barrel from translating in a second sense opposite to said first sense.

2. The lock of claim 1 wherein said tumbler is rotatable about an axis perpendicular to said barrel axis.

3. The lock of claim 1 or claim 2 wherein said barrel is rotatable by said key to cause said translation in said first sense.

4. The lock of any preceding claim wherein the tumbler is connected to the barrel by a resilient element for urging said tumbler to an undeployed position.

5. The lock of claim 4 wherein the resilient element is a coil spring.

6. The lock of any preceding claim wherein said formation of said housing comprises a circumferentially-disposed inwardly-directed ridge on a surface of said housing.

7. The lock of any preceding claim wherein there is provided a bias element for rotationally urging the tumbler with respect to said barrel.

8. A lock having a barrel and the housing for the barrel, the barrel having a key way for a key and being translatable with respect to the housing along the barrel axis whilst said key is inserted into said key way, said barrel supporting a tumbler via a resilient element, the tumbler having a camming surface in use interacting with said key upon insertion thereof to urge said tumbler outwards against said resilient element, said tumbler being rotatable about an axis perpendicular to said barrel axis to permit said tumbler to pass beyond a formation of said housing and said barrel translates in a first sense, and thereafter to rotate about said axis perpendicular to said barrel axis in response to said resilient element to a disposition with respect to said barrel in which it engages a surface of said formation to prevent said barrel translating in a second sense opposite to said first sense.

9. The lock of claim 8 wherein said barrel is rotatable by said key to cause said translation in said first sense.

10. The lock of claim 8 or claim 9 wherein the tumbler is connected to the barrel by a resilient element for urging said tumbler to an undeployed position.

11. The lock of any of claims 8-10 wherein said formation of said housing comprises a circumferentially-disposed inwardly-directed ridge on a surface of said housing.

12. A method of operating a lock having a barrel and the housing for said barrel, the method comprising:-
with said barrel in an initial disposition with respect to said housing, inserting a key into a key way of said barrel, whereby a tumbler moves outwardly with respect to said barrel;
causing said barrel to translate in a first sense along an axis whereby said tumbler passes beyond a feature of said housing;
causing said barrel to translate in a second sense whereby said tumbler engages said feature of said housing, thereby preventing said barrel from translating in said second sense to said initial disposition; and
withdrawing said key, whereby said tumbler moves radially inwardly with respect to said barrel to no longer engage said feature whereby said barrel translates to said initial disposition.

13. The method of claim 12 wherein said step of causing said barrel to translate in said first sense further comprises rotating said barrel simultaneously with said translation.

14. The lock constructed and arranged substantially as herein described with reference to or as illustrated in the accompanying drawings.

15. A method of operating a lock substantially as herein described with reference to or as shown in the accompanying drawings.
